# FASCICULE DE BREVET EUROPEEN

(11) **EP 3 286 474 B1**
(45) Date de publication et mention de la délivrance du brevet: **12.06.2019**
(21) Numéro de dépôt: 16721684.5
(22) Date de dépôt: 20.04.2016
(51) Int. Cl.: F16L 33/01, F16L 11/08

(54) **PROCÉDÉ DE RÉALISATION D'UNE ÉTANCHÉITÉ DANS UN EMBOUT D'UNE CONDUITE FLEXIBLE COMPRENANT UNE GAINE DE PRESSION**
VERFAHREN ZUR HERSTELLUNG EINER ABDICHTUNG IN EINEM ENDSTÜCK EINER FLEXIBLEN LEITUNG MIT EINER DRUCKHÜLLE
METHOD FOR FORMING A SEAL IN AN END FITTING OF A FLEXIBLE CONDUIT INCLUDING A PRESSURE SHEATH

(30) Priorité: 20.04.2015 FR 1553484
(43) Date de publication de la demande: 28.02.2018
(73) Titulaire: Technip France, 92400 Courbevoie (FR)
(72) Inventeur: PECKEU, Grégory, 27310 Bourg-Achard (FR); PINSON, Julia, 76210 Gruchet-le-Valasse (FR); COLMARD, Antoine, 76190 Etoutteville (FR)
(74) Mandataire: Lavoix
(86) Numéro de dépôt international: PCT/EP2016/058766
(87) Numéro de publication internationale: WO 2016/169987

(56) Documents cités:
- WO-A1-2012/110637
- WO-A1-2015/025095
- DE-A1- 3 814 410
- FR-A1- 2 782 364
- US-A- 3 415 545

## Description

La présente invention concerne un procédé de réalisation d'une étanchéité dans un embout d'une conduite flexible comprenant une gaine de pression selon le préambule de la revendication 1. WO2012110637 décrit un tel procédé. US3415545 décrit un procédé comprenant la disposition d'une bague autour d'un tronçon d'extrémité d'une gaine et le placement, autour du tronçon d'extrémité et de la bague, d'une voûte d'extrémité. Le procédé comporte ensuite un déplacement de la bague pour réaliser une étanchéité autour de la gaine. Avant le serrage, une canule est introduite dans la gaine, après chauffage de la gaine à plus de 65°C.

La conduite flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

En variante, la conduite flexible est dédiée à des applications de forage et de raffinage, portant l'acronyme « DRAPS », fabriquée et commercialisée par la Demanderesse. Cette conduite flexible est par exemple une conduite d'évacuation (« choke line » en langue anglaise) et d'obturation (« kill line » en langue anglaise) tel que décrit par le document normatif établi par l'American Petroleum Institute, l'API 16C.

De préférence, ce type de conduite est destinée à être disposée dans une étendue d'eau mais elle peut, parfois, être utilisée à terre sur le continent.

La conduite est généralement formée d'un ensemble de couches métalliques et polymériques concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide.

L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bar et 1500 bar, et une température comprise entre 110°C et 130°C. De plus, dans le cas où la conduite est immergée à grande profondeur, celle-ci doit être capable de résister à une pression externe très élevée, par exemple de l'ordre de 250 bar si la conduite est immergée à 2500 mètres de profondeur.

Pour répondre à de telles performances, il est connu d'utiliser des gaines de pression réalisées à partir de matériaux polymères hautes performances qui présentent de préférence un module d'Young d'au moins 2000 MPa, tels que par exemple le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'utilisation de ces matériaux peut poser des problèmes lors de la réalisation de l'étanchéité autour de la gaine de pression, lors du montage des embouts.

En effet, lors de ce montage, une bague est sertie au niveau de la face externe de la gaine de pression pour s'incruster dans celle-ci. La voûte de l'embout est poussée axialement le long de la conduite, de sorte que la bague de sertissage entre en contact avec une surface inclinée de la voûte de l'embout. Ceci engendre une pression radiale ou « dudgeonnage » sur la bague de sertissage, qui pénètre radialement dans l'épaisseur de la gaine de pression. Ceci étant fait, la gaine de pression est sertie et l'étanchéité est réalisée.

Cette opération est facilement exécutable pour des gaines de pression réalisées à partir de matériaux polymères qui présentent un module d'Young peu élevé dans la plage de température usuelle pour ce type d'opération, par exemple [-10°C ; +40°C].

Cependant, pour certains matériaux polymères hautes performances, l'opération de sertissage est beaucoup plus compliquée. En effet, leur module d'Young étant plus élevé, dans la gamme de températures précitée, le sertissage est beaucoup plus difficile.

Pour sertir des gaines en polymère réalisées à partir de matériaux hautes performances tout en gardant la même conception d'embout, il est nécessaire d'utiliser des dispositifs hydrauliques développant plusieurs dizaines de tonnes de poussée, afin de positionner la voûte de l'embout autour de l'extrémité de la conduite.

L'application d'un tel effort peut en outre entraîner une déformation de la carcasse métallique (dans le cas où la conduite est de type « rough-bore ») pouvant conduire à une perte d'étanchéité dans l'embout.

Un but de l'invention est donc de faciliter le sertissage de la gaine de pression lors du montage des embouts d'extrémités, notamment lorsque la gaine de pression est réalisée à partir de matériaux polymères hautes performances.

A cet effet, l'invention a pour objet un procédé selon la revendication 1.

Le procédé selon l'invention peut comprendre l'une ou plusieurs des caractéristiques des revendications 2 à 15.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue partielle, prise en coupe suivant un plan axial médian, de l'embout de la première conduite flexible selon l'invention ;
- la figure 3 est une vue partielle des parties pertinentes d'un embout de la conduite flexible de la figure 1, en cours de montage, lors de la mise en oeuvre du procédé de réalisation d'une étanchéité selon l'invention ;
- la figure 4 est une vue analogue à la figure 3, dans une variante du procédé de réalisation d'une étanchéité selon l'invention ;
- la figure 5 est une vue analogue à la figure 4, pour l'embout d'une autre conduite flexible ;
- la figure 6 est une vue analogue à la figure 2 de l'embout d'encore une autre conduite flexible.

Dans tout ce qui suit, les termes « extérieur » et « intérieur » s'entendent généralement de manière radiale par rapport à un axe X-X' de la conduite, le terme « extérieur » s'entendant comme relativement plus éloigné radialement de l'axe X-X' et le terme « intérieur » s'étendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

Un premier procédé de réalisation d'une étanchéité selon l'invention est mis en oeuvre lors du montage d'un embout 14 d'une conduite flexible 10 destinée à être introduite dans une étendue d'eau pour transporter un fluide.

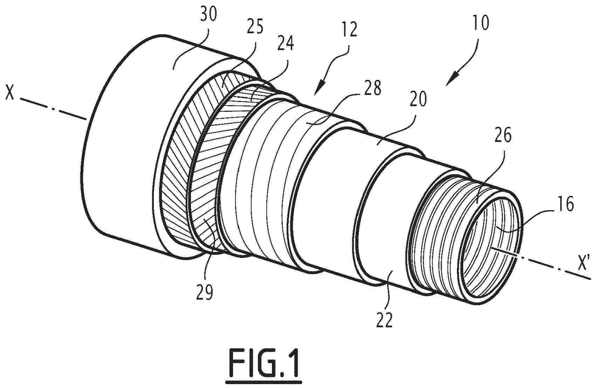

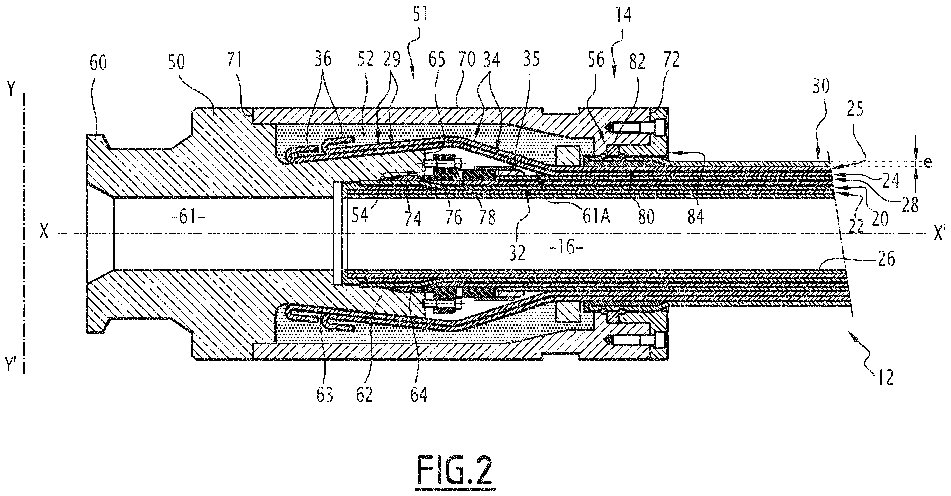

La conduite flexible 10 comporte un tronçon central 12 illustré en partie sur la figure 1. Elle comporte, à chacune des extrémités axiales du tronçon central 12, un embout d'extrémité 14 dont les parties pertinentes sont représentées sur la figure 2.

Sur la figure 2, outre l'embout 14, est représentée une partie du tronçon central 12 adjacente à l'embout 14.

En référence à la figure 1, la conduite flexible 10 délimite un passage central 16 de circulation d'un fluide, avantageusement d'un fluide pétrolier. Le passage central 16 s'étend suivant un axe X-X', entre l'extrémité avant et l'extrémité arrière de la conduite flexible 10. Il débouche à travers les embouts 14.

Dans tout ce qui suit, on définit, également, un axe radial Y-Y' perpendiculaire à l'axe X-X' et situé dans un plan axial médian de la conduite flexible 10, comme visible sur la figure 2.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau, au droit de l'installation d'exploitation de fluide, est par exemple comprise entre 500 m et 3500 m.

L'installation d'exploitation de fluide comporte un ensemble de surface notamment flottant et un ensemble de fond (non représentés) qui sont généralement raccordés entre eux par la conduite flexible 10.

En variante, comme précisé plus haut, la conduite flexible est disposée à terre, sur le continent.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, API RP17B et API 16C.

Comme illustré par la figure 1, la conduite flexible 10 délimite une pluralité de couches concentriques autour de l'axe X-X', qui s'étendent continûment le long du tronçon central 12 jusqu'aux embouts 14 situés aux extrémités de la conduite.

Selon l'invention, la conduite flexible 10 comporte au moins une première gaine tubulaire 20 à base de matériau polymère constituant avantageusement une gaine de pression. Avantageusement, la conduite flexible 10 comprend plusieurs gaines tubulaires polymériques telle qu'un gaine intermédiaire ou gaine sacrificielle 22. Elle peut comporter une ou deux gaines polymériques en plus de la gaine de pression 20.

La conduite flexible 10 comporte en outre au moins une couche d'armures de traction 24, 25 disposée extérieurement par rapport à la première gaine 20 formant une gaine de pression.

Dans cet exemple, la conduite flexible 10 comporte en outre une carcasse interne 26 disposée à l'intérieur de la gaine sacrificielle 22, la gaine de pression 20 disposée au-dessus de la gaine sacrificielle 22, une voûte de pression 28 intercalée entre la gaine de pression 20 et la au moins une couche d'armures de traction 24, 25 et une gaine externe 30, destinée à la protection de la conduite flexible 10.

La gaine sacrificielle 22 est par exemple réalisée à base d'un polyoléfine tel que du polyéthylène, à base d'un polyamide tel que du PA11 ou du PA12, ou à base d'un polymère fluoré tel que du polyfluorure de vinylidène (PVDF).

Dans une variante, une gaine polymérique supplémentaire réalisée à partir des mêmes matériaux polymères que ceux de la gaine sacrificielle 22 est disposée entre la gaine de pression 20 et la voûte de pression 28.

De manière connue, la gaine de pression 20 est destinée à confiner de manière étanche le fluide transporté dans le passage 16. Elle est formée en matériau polymère, par exemple à base d'un PAEK (polyaryléthercétone) tel que du PEEK (polyétheréthercétone), du PEKK (polyéthercétonecétone), du PEK (polyéthercétone), du PEEKK (polyétheréthercétonecétone), du PEKEKK (polyéthercétoneéthercétonecétone) ou par exemple à base d'un PSU (polysulfone) tel que du PPSU (polyphénylsulfone), du PES (polyéthersulfone), du PAS (polyarylsulfone) ou à base d'un polyimide (PI) tel que du PAI (polyamide-imide), du PEI (polyéther-imide), ou à base d'un PPE (polyphénylèneéther), d'un PPS (polysulfure de phénylène), de LCP (polymères à cristaux liquides), d'un PPA (polyphtalamide), d'un COC (copolymère d'oléfine cyclique) et/ou à base de leurs mélanges ou encore en mélange avec un composé lubrifiant fluoré ou perfluoré du type PTFE (polytétrafluoroéthylène) ou PFPE (perfluoropolyéther).

En variante, la gaine de pression 20 est réalisée à base d'un polyoléfine tel que du polyéthylène, à base d'un polyamide tel que du PA11 ou du PA12, ou à base d'un polymère fluoré tel que du polyfluorure de vinylidène (PVDF) ou à base d'un copolymère fluoré à base de fluorure de vinylidène.

Le matériau polymère formant la gaine de pression 20 présente un module d'Young à température ambiante, par exemple à 23°C ±2°C, compris entre 100 MPa et 4000 MPa, tel que mesuré par la Norme ISO 527-1:2012 ou ASTM D638-10. Avantageusement, le module est compris entre 2000 MPa et 4000 MPa, tel que mesuré par cette Norme.

L'épaisseur de la gaine de pression 20 est par exemple comprise entre 5 mm et 20 mm.

La gaine de pression 20 comporte un tronçon d'extrémité 32 inséré dans l'embout 14.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26.

La carcasse 26 est propre à entrer en contact avec le fluide circulant dans la gaine sacrificielle 22.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

La fonction principale de la voûte de pression 28 est de reprendre les efforts radiaux liés à la pression régnant à l'intérieur de la gaine de pression 20. La voûte de pression 28 est par exemple formée d'un fil profilé métallique entouré en hélice autour et à l'extérieur de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La voûte de pression 28 présente une région d'extrémité 35 insérée dans l'embout 14, à l'extérieur du tronçon d'extrémité 32 de la gaine de pression 20. Le tronçon d'extrémité 32 de la gaine de pression 20 fait saillie axialement vers l'avant au-delà de la région d'extrémité 35 de la voûte de pression 28.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 2, la conduite flexible 10 comporte une pluralité de couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe X-X' de la conduite.

Par « enroulé à pas long », on entend que la valeur absolue de l'angle d'hélice est inférieure à 60°, et est typiquement comprise entre 25° et 55°.

La fonction principale des couches d'armures 24, 25 est de reprendre les efforts axiaux de traction exercés sur la conduite flexible 10, notamment ceux liés au poids pendu dans le cas d'une conduite montante,

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone.

Comme on le verra plus bas, les éléments d'armure 29 présentent chacun un tronçon d'extrémité 34 introduit dans l'embout 14. Le tronçon d'extrémité 34 s'étend jusqu'à une extrémité libre 36 disposée dans l'embout 14. Il présente avantageusement une trajectoire pseudo-hélicoïdale d'axe X-X' dans l'embout 14, l'hélice s'enroulant sur une enveloppe conique.

Dans l'exemple représenté sur la figure 2, pour chaque couche d'armures 24, 25, les tronçons d'extrémité 34 des éléments d'armure 29 s'étendent de manière divergente à l'écart de l'axe X-X', puis convergente vers l'axe X-X' depuis un point de décollement arrière 61A vers une extrémité avant libre 36.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, ou à base d'un polyamide, tel que du PA11 ou du PA12.

L'épaisseur de la gaine externe 30 est par exemple comprise entre 5 mm et 15 mm.

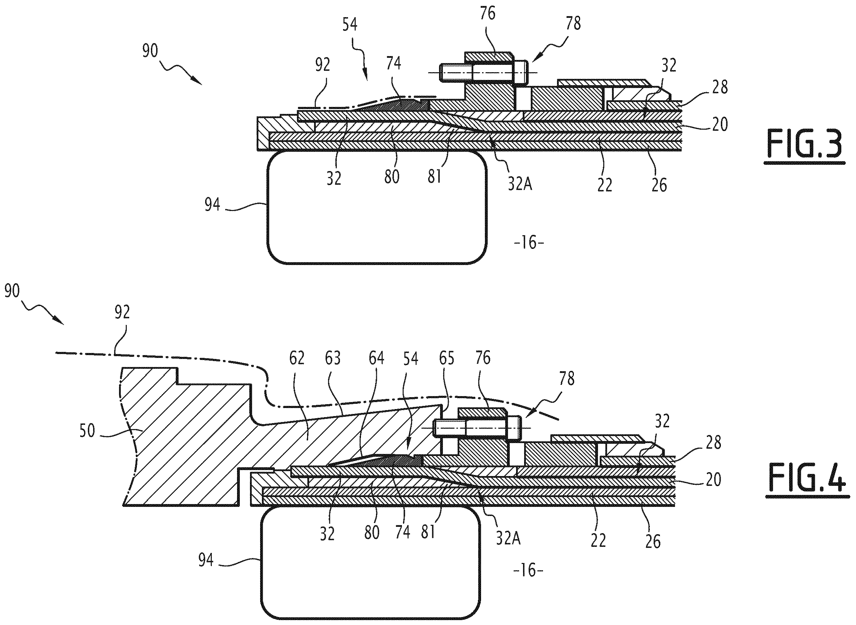

Comme illustré par la figure 2, outre les tronçons d'extrémité 34 des éléments d'armure 29, le tronçon d'extrémité 32 de la gaine de pression 20, le tronçon d'extrémité 32A de la gaine sacrificielle 22 (visible sur les figures 3 et 4) et la région d'extrémité 35 de la voûte de pression 28, chaque embout 14 comporte une voûte d'extrémité 50 et un capot extérieur de liaison 51 faisant saillie axialement vers l'arrière à partir de la voûte 50.

Le capot 51 délimite, avec la voûte d'extrémité 50, une chambre 52 de réception des tronçons d'extrémité 34 des éléments d'armure 29, et de la région d'extrémité 35 de la voûte 28.

L'embout 14 comporte, en outre, un ensemble avant 54 d'étanchéité autour de la gaine de pression 20 et un ensemble arrière 56 d'étanchéité autour de la gaine extérieure 30.

Dans cet exemple, la voûte d'extrémité 50 est destinée à raccorder la conduite flexible 10 à un autre embout de connexion 14 ou à des équipements terminaux, avantageusement par l'intermédiaire d'une bride d'extrémité 60.

La voûte d'extrémité 50 présente un alésage central 61 destiné à recevoir l'extrémité de la gaine de pression 20 et à permettre l'écoulement du fluide circulant à travers le passage central 16 vers l'extérieur de la conduite flexible 10.

La voûte d'extrémité 50 présente à l'arrière, en regard du capot 51, une jupe d'appui 62 des tronçons d'extrémité 34 des éléments d'armure 29.

La jupe 62 définit une surface périphérique extérieure 63, ici de forme tronconique convergente vers l'avant, une surface périphérique intérieure 64 de coopération avec l'ensemble avant d'étanchéité 54, et une surface annulaire arrière 65 transversale, raccordant la surface périphérique extérieure 63 à la surface périphérique intérieure 64.

La surface de coopération 64 présente une forme divergente à l'écart de l'axe X-X' vers l'arrière, destinée à coopérer avec l'ensemble avant d'étanchéité 54.

Le capot 51 comporte une paroi périphérique 70 tubulaire s'étendant autour de l'axe X-X'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

Le capot 51 délimite la chambre 52 radialement vers l'extérieur. Un matériau de remplissage remplit avantageusement la chambre 52. Le matériau de remplissage est par exemple une résine époxy.

L'ensemble avant d'étanchéité 54 est avantageusement situé à l'avant de l'embout 14, en contact avec la voûte d'extrémité 50.

Il comporte une bague avant 74 de sertissage, destinée à venir en prise sur la gaine de pression 20 lors de la mise en oeuvre du procédé selon l'invention, une bride avant 76 d'appui sur la bague avant 74, et un ensemble 78 de serrage de la bride avant 76 sur la voûte d'extrémité 50 pour bloquer le déplacement axial de la bague avant 74 lorsque l'on vient déplacer axialement la voûte d'extrémité 50 pour la positionner autour du tronçon d'extrémité 32 de la gaine de pression 20.

Dans l'exemple illustré sur la figure 3, l'ensemble avant d'étanchéité 54 comporte en outre une canule cylindrique 80 de support du tronçon d'extrémité 32, interposée entre la gaine sacrificielle 22 et le tronçon d'extrémité 32 de la gaine de pression 20, en regard axialement de la bague avant de sertissage 74.

La bague avant 74 est calée sous la surface de coopération 64. Elle est propre à se déformer radialement vers l'intérieur dans le tronçon d'extrémité 32 de la gaine de pression 20, par effet de coin, lors d'un déplacement axial vers l'arrière de la voûte d'extrémité 50 alors que la bague avant 74 est bloquée axialement par la bride avant 76.

La bague 74 présente avantageusement un bord avant effilé présentant un renflement annulaire.

Ainsi, lors du déplacement axial vers l'arrière de la voûte d'extrémité 50, le bord avant effilé de la bague 74 prend appui sur la surface de coopération 64 entraînant un déplacement relatif de la bague 74 par rapport à la voûte d'extrémité 50.

Le déplacement relatif de la bague 74 par rapport à la voûte d'extrémité 50 est un déplacement radial suivant l'axe X-X' de la conduite flexible 10. De la sorte, le renflement annulaire du bord avant effilé de la bague avant 74 pénètre dans le tronçon d'extrémité 32 et permet de réaliser une étanchéité annulaire par sertissage de la bague 74.

La bride avant 76 est calée entre l'extrémité de la voûte de pression 28 et l'arrière de la bague de sertissage 74. Elle est propre à buter contre la surface transversale 65 de la voûte d'extrémité 50 lors du montage de l'ensemble de serrage 78.

L'ensemble de serrage 78 comporte ici des vis propres à s'insérer dans la jupe d'appui 62 de la voûte d'extrémité 50 à travers la bride avant 76 et la surface transversale 65.

La canule 80 est de forme cylindrique d'axe X-X'. Elle est calée autour de la gaine sacrificielle 22. Elle présente une extrémité arrière 81 effilée permettant le décollement du tronçon d'extrémité 32 après l'insertion de la canule 80.

L'ensemble arrière d'étanchéité 56 est placé à l'arrière de l'ensemble avant d'étanchéité 54.

Il comporte au moins une bague arrière de sertissage 82 sertissant la gaine externe 30, et une bride arrière 84 de serrage de la bague arrière 82, sur le capot 51, avantageusement au niveau du bord arrière 72 de la paroi périphérique 70.

Pour la mise en oeuvre du procédé selon l'invention, un équipement de chauffage 90, représenté schématiquement sur la figure 3, est utilisé pour chauffer localement le tronçon d'extrémité 32 du matériau polymère formant la gaine de pression 20, afin de réduire son module d'Young.

Dans l'exemple illustré par la figure 3, l'équipement de chauffage 90 comprend un élément chauffant 92 placé au contact du tronçon d'extrémité 32 de la gaine de pression 20 et/ou de la bague avant de sertissage 74, pour chauffer le tronçon d'extrémité 32 de la gaine de pression 20 depuis l'extérieur.

L'équipement de chauffage 90 comprend ici également un mandrin chauffant 94, introduit dans la carcasse 26 pour chauffer le tronçon d'extrémité 32 de la gaine de pression 20 depuis l'intérieur.

L'élément chauffant 92 est par exemple une couverture chauffante, enroulée autour de la gaine 20 et de la bague 74 et/ou une bande chauffante. L'élément chauffant 92 est propre à chauffer le tronçon d'extrémité 32 par contact direct avec le tronçon d'extrémité 32 ou à travers la bague de sertissage 74.

Le mandrin chauffant 94 est placé de préférence au contact de la carcasse 26. Il est propre à chauffer le tronçon d'extrémité 32 à travers la gaine sacrificielle 22 et/ou la canule 80.

Un procédé de réalisation d'une étanchéité selon l'invention va maintenant être décrit, lors du montage de l'embout 14 à l'extrémité du tronçon central 12 de la conduite flexible 10.

Initialement, le tronçon central 12 est fourni. Un tronçon d'extrémité de la gaine externe 30 est découpé pour laisser apparaître les tronçons d'extrémité 34 des éléments d'armure 29, et en dessous, la voûte de pression 28, la gaine de pression 20, la gaine sacrificielle 22 et la carcasse interne 26.

Les éléments constituant l'ensemble arrière d'étanchéité 56 et le capot 51 sont engagés autour de la gaine externe 30 et sont déplacés vers l'arrière.

Les éléments d'armure 29 sont écartés radialement du tronçon d'extrémité 32 de la gaine de pression 20 et une partie d'extrémité de la voûte 28 est découpée pour faire apparaître le tronçon d'extrémité 32 de la gaine de pression 20.

La canule 80 est alors mise en place entre le tronçon d'extrémité 32 et la gaine sacrificielle 22.

La bride avant 76 d'appui est engagée autour du tronçon d'extrémité 32 et est déplacée vers l'arrière. La bague de sertissage 74 est alors montée autour du tronçon d'extrémité 32 jusqu'à buter contre la bride avant 76.

Dans l'exemple représenté sur la figure 3, l'élément chauffant 92 est alors mis en place. Il est enroulé autour de la bague de sertissage 74 et du tronçon d'extrémité 32 pour entrer en contact avec le tronçon d'extrémité 32 et avec la bague de sertissage 74 qu'il recouvre.

De même, le mandrin chauffant 94 est introduit dans la carcasse 26 et est placé en regard axialement du tronçon d'extrémité 32, de la bague de sertissage 74 et de la canule 80.

Avantageusement, des sondes de température sont placées au contact du tronçon 32 entre l'élément chauffant 92 et le tronçon d'extrémité 32.

L'élément chauffant 92 et le mandrin chauffant 94 sont alors activés pour augmenter la température du tronçon d'extrémité 32 de la gaine de pression 20 à une température supérieure à la température ambiante.

De préférence, la température du tronçon d'extrémité 32 est augmentée jusqu'à une température de consigne comprise entre 100 °C et 200 °C.

Avantageusement, cette température est supérieure à 50 °C, pour assurer après le sertissage, le relâchement des contraintes.

La température du tronçon d'extrémité 32 de la gaine de pression 20 est choisie pour que le module d'Young du matériau polymère du tronçon d'extrémité 32 après chauffage soit inférieur à 1000 MPa, et soit notamment compris entre 50 MPa et 500 MPa.

Ceci étant fait, l'élément chauffant 92 est retiré et la voûte d'extrémité 50 est engagée autour de la gaine de pression 20 pour placer la jupe d'appui 62 en regard du tronçon d'extrémité 32.

La bague de sertissage 74 est alors disposée au contact de la surface interne de coopération 64.

L'ensemble de serrage 78 est mis en place pour bloquer axialement vers l'arrière la bride avant d'appui 76. La voûte d'extrémité 50 est déplacée axialement vers l'arrière. Par effet de coin, le bord avant effilé de la bague de sertissage 74 prend appui sur la surface interne de coopération 64 et se déforme radialement vers l'axe X-X' dans le tronçon d'extrémité 32 pour réaliser une étanchéité annulaire par sertissage.

La profondeur radiale de pénétration de la bague 74 est par exemple supérieure à 20 % de l'épaisseur locale du tronçon d'extrémité 32 de la gaine de pression 20.

Le module d'Young du matériau polymère du tronçon d'extrémité 32 ayant été localement abaissé, il est possible de sertir des gaines réalisées à base de polymères hautes performances présentant un module d'Young élevé à température ambiante, de préférence supérieur ou égal à 2000 MPa, avec un effort de sertissage grandement réduit, et une pression diminuée de la gaine 20 contre la carcasse 26.

Ceci améliore grandement le niveau de sertissage, avec une fiabilité améliorée. L'opération de sertissage est moins fastidieuse pour les opérateurs, lorsque ceux-ci effectuent le serrage avec des vis. Les vis utilisées dans l'ensemble de serrage 78 sont avantageusement de taille réduite ou sont moins nombreuses, ce qui peut réduire l'encombrement de l'embout 14 et son diamètre. Aussi, les vis sont moins sollicitées, ceci permettant d'utiliser des vis de classe de qualité réduite.

De plus, la réduction de la pression appliquée par la gaine 20 sur la carcasse 26 permet d'utiliser des canules 80 d'épaisseur réduite.

Lorsqu'une température élevée est utilisée pour le chauffage de la gaine de pression 20, une seule opération de chauffage est nécessaire pour assurer à la fois le sertissage par la bague 74 et le relâchement des contraintes après sertissage.

Il est donc possible d'utiliser des polymères hautes performances adaptés à des hautes températures et à des pressions élevées pour réaliser la gaine de pression 20 d'une conduite flexible 10, sans risque de détérioration de l'étanchéité au niveau de l'embout 14, et en utilisant une conception d'embout 14 identique à celle utilisée pour des polymères standards. La conduite flexible 10 est donc particulièrement adaptée pour transporter des fluides à haute température et à pression élevée.

Dans la variante de procédé illustrée par la figure 4, la voûte d'extrémité 50 est mise en place autour du tronçon d'extrémité 32 et de la bague avant de sertissage 74, avant chauffage du tronçon d'extrémité 32. L'élément chauffant 92 est alors disposé au contact d'une surface périphérique externe 63 de la jupe 62 pour chauffer la voûte 50 et le tronçon d'extrémité 32 à travers la jupe 62, avant le serrage de la bague d'appui 76 par l'ensemble de serrage 78.

Dans une autre variante, le mandrin 94 est remplacé par une fourniture d'air chaud circulant dans le passage de circulation 16.

Dans une autre variante, une cocotte de chauffe est disposée extérieurement autour du tronçon d'extrémité 32, dans le mode de réalisation de la figure 3, ou autour de la voûte 50, dans le mode de réalisation de la figure 4.

Dans encore une autre variante, la canule 80 est introduite entre la gaine sacrificielle 22 et le tronçon d'extrémité 32 de la gaine de pression 20, après chauffage du tronçon d'extrémité 32.

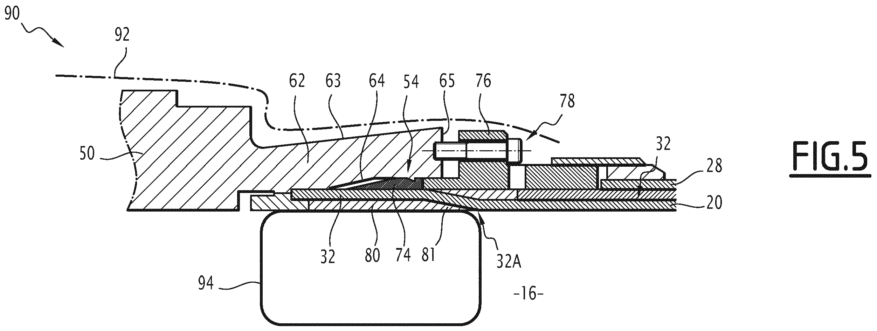

Dans une variante de réalisation de la conduite flexible 10, illustrée par la figure 5 la conduite 10 ne comporte pas de carcasse interne 26 et est alors désignée par le terme anglais « smooth-bore ». La gaine de pression 20 est la couche située la plus à l'intérieur de la structure de la conduite 10 au contact du fluide circulant dans le passage 16. La canule 80 est alors insérée directement au contact de la surface intérieure de la gaine de pression 20.

Le procédé de réalisation d'une étanchéité selon l'invention de la figure 5 diffère de celui appliqué à une conduite flexible « rough-bore » en ce que l'équipement de chauffage 90 comprend un mandrin chauffant 94 introduit dans la gaine de pression 20 pour chauffer le tronçon d'extrémité 32 au niveau de sa surface intérieure et réduire plus rapidement le module d'Young du matériau utilisé pour la réalisation de la gaine 20. Ainsi, l'insertion de la canule 80 est favorisée.

En outre, utilisé en combinaison avec le mandrin chauffant 94 ou comme alternative, un élément chauffant 92 telle qu'une couverture chauffante et/ou une bande chauffante enroulée autour de la gaine de pression 20 et de la bague 74 chauffe localement le tronçon d'extrémité 32 et réduit plus rapidement le module d'Young du matériau utilisé pour la réalisation de la gaine 20.

En variante, on chauffe le tronçon d'extrémité 32 avec une fourniture d'air chaud appliquée extérieurement par rapport à la gaine de pression.

Dans une autre variante, une cocotte de chauffe est disposée extérieurement autour du tronçon d'extrémité 32, dans le mode de réalisation de la figure 5.

Avantageusement, la voûte d'extrémité 50 est toujours mise en place autour du tronçon d'extrémité 32 et de la bague avant de sertissage 74, après chauffage du tronçon d'extrémité 32.

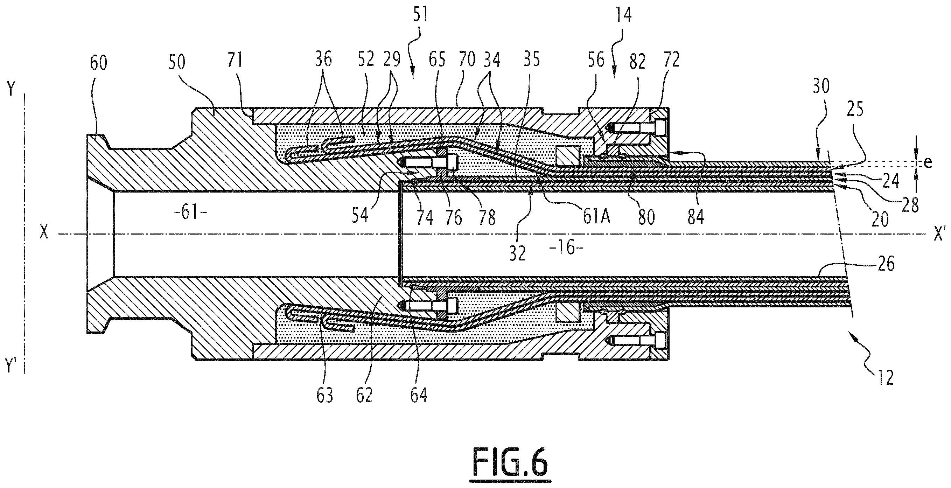

Dans une encore autre variante de réalisation de l'invention, illustrée par la figure 6, la conduite flexible 10 possède une structure comprenant, de l'intérieur vers l'extérieur, une carcasse interne 26, une gaine de pression 20, une voûte de pression 28, au moins une couche d'armures 24, 25 de résistance aux efforts de traction axiaux et une gaine externe 30.

Dans cette configuration de conduite flexible 10, l'utilisation d'une canule 80 n'est techniquement pas envisageable.

L'étape de chauffage du tronçon d'extrémité 32 de la gaine de pression 20 réalisée lors du procédé de réalisation de l'étanchéité de l'embout sert pour la relaxation des contraintes liées au sertissage de la gaine de pression 20, dès lors que la bague de serrage 74 de l'ensemble de sertissage avant 54 s'est déformée radialement vers l'intérieur dans ladite gaine 20.

## Revendications

1. Procédé de réalisation d'une étanchéité dans un embout (14) d'une conduite flexible (10) comprenant une gaine de pression (20) réalisée à partir d'un matériau polymère, le procédé comportant les étapes suivantes :
- disposition, autour d'un tronçon d'extrémité (32) de la gaine de pression (20), d'une bague de sertissage (74) destinée à s'introduire dans la gaine de pression (20) ;
- placement, autour du tronçon d'extrémité (32) et de la bague de sertissage (74), d'une voûte d'extrémité (50) de l'embout (14), la voûte d'extrémité (50) présentant une surface de coopération (64) avec la bague de sertissage (74), propre à pousser la bague de sertissage (74) radialement dans la gaine de pression (20) ;
- déplacement relatif de la bague de sertissage (74) par rapport à la surface de coopération (64) pour sertir la bague de sertissage (74) dans la gaine de pression (20) ;
**caractérisé en ce que** le procédé comporte, avant l'étape de déplacement relatif, une étape de chauffage du tronçon d'extrémité (32) de la gaine de pression (20), propre à réduire le module d'Young du matériau polymère du tronçon d'extrémité (32) de la gaine de pression (20) et à maintenir un module d'Young réduit lors de l'étape de déplacement relatif.

2. Procédé selon la revendication 1, dans lequel le module d'Young du matériau polymère du tronçon d'extrémité (32) de la gaine de pression (20), lors de l'étape de déplacement relatif, est inférieur à 1000 MPa, et est notamment compris entre 50 MPa et 500 MPa.

3. Procédé selon la revendication 1 ou 2, dans lequel la température du tronçon d'extrémité (32) de la gaine de pression (20), lors de l'étape de déplacement relatif, est supérieure à la température ambiante.

4. Procédé selon la revendication 3, dans lequel la température du tronçon d'extrémité (32) de la gaine de pression (20), lors de l'étape de déplacement relatif, est supérieure à 50 °C et est notamment comprise entre 100 °C et 200 °C.

5. Procédé selon l'une quelconque des revendications précédentes, dans lequel la gaine de pression (20) est réalisée à partir d'un matériau polymère choisi parmi le PVDF, le PEK, PEEK, le PEEKK, le PEKK, le PEKEKK, le PAI, le PEI, le PSU, le PPSU, le PES, le PAS, le PPE, le PPS, les LCP, le PPA et/ou leurs mélanges.

6. Procédé selon l'une quelconque des revendications précédentes, dans lequel le tronçon d'extrémité (32) de la gaine de pression (20) est chauffé par l'extérieur lors de l'étape de chauffage.

7. Procédé selon la revendication 6, dans lequel une surface extérieure du tronçon d'extrémité (32) de la gaine de pression (20) est chauffée par contact direct d'un élément chauffant (92) avec la gaine de pression (20) et/ou avec la bague de sertissage (74).

8. Procédé selon la revendication 6, dans lequel l'étape de placement de la voûte d'extrémité (50) est réalisée avant l'étape de chauffage, l'étape de chauffage comprenant le chauffage de la voûte d'extrémité (50) par contact direct de la voûte d'extrémité (50) avec un élément chauffant (92), et le chauffage d'une surface extérieure du tronçon d'extrémité (32) de la gaine de pression (20) à travers la voûte d'extrémité (50).

9. Procédé selon l'une quelconque des revendications 7 ou 8, dans lequel l'élément chauffant (92) est une bande chauffante et/ou une couverture chauffante.

10. Procédé selon l'une quelconque des revendications précédentes, dans lequel le tronçon d'extrémité (32) de la gaine de pression (20) est chauffé par l'intérieur lors de l'étape de chauffage.

11. Procédé selon la revendication 10, dans lequel le tronçon d'extrémité (32) de la gaine de pression (20) est disposé autour d'une carcasse interne (26) définissant un passage interne (16) de circulation de fluide, l'étape de chauffage comprenant le chauffage par l'intérieur de la carcasse interne (26).

12. Procédé selon la revendication 11, dans lequel la carcasse interne (26) est chauffée par un mandrin chauffant (94) et/ou par circulation d'air chaud dans le passage de circulation de fluide (16).

13. Procédé selon l'une quelconque des revendications 11 ou 12, dans lequel une canule (80) est interposée entre une gaine sacrificielle (22) disposée autour de la carcasse interne (26) et le tronçon intermédiaire (32) de la gaine de pression (20), la canule (80) étant chauffée à l'étape de chauffe par la carcasse interne (26), une surface interne du tronçon d'extrémité (32) de la gaine de pression (20) étant chauffée par la canule (80).

14. Procédé selon l'une quelconque des revendications précédentes, comprenant une étape de mesure de la température du tronçon d'extrémité (32) de la gaine de pression (20) durant l'étape de chauffe.

15. Procédé selon l'une quelconque des revendications précédentes, dans lequel le déplacement relatif de la bague de sertissage (74) par rapport à la voûte d'extrémité (50) est un déplacement radial par rapport à un axe (X-X') de la conduite flexible (10).

## Patentansprüche

1. Verfahren zum Herstellen einer Dichtigkeit in einem Anschlussstück (14) einer biegsamen Leitung (10), die eine Druckhülle (20) aufweist, die aus einem Polymermaterial hergestellt ist, wobei das Verfahren die folgenden Schritte umfasst:
- Anordnen eines Klemmrings (74), der dazu bestimmt ist, in die Druckhülle (20) eingeführt zu werden, um ein Endteilstück (32) der Druckhülle (20)
- Anordnen einer Endschulter (50) des Anschlussstücks (14) um das Endteilstück (32) und den Klemmring (74), wobei die Endschulter (50) eine Oberfläche (64) für die Zusammenwirkung mit dem Klemmring (74) aufweist, die den Klemmring (74) in der Druckhülle (20) radial schieben kann;
- relatives Verlagern des Klemmrings (74) in Bezug auf die Zusammenwirkungsoberfläche (64), um den Klemmring (74) in der Druckhülle (20) festzuklemmen;
**dadurch gekennzeichnet, dass** das Verfahren vor dem Schritt des relativen Verlagerns einen Schritt des Erwärmens des Endteilstücks (32) der Druckhülle (20) umfasst, der den Young-Modul des Polymermaterials des Endteilstücks (32) der Druckhülle (20) verringern kann und einen verringerten Young-Modul während des Schrittes des relativen Verlagerns aufrechterhalten kann.

2. Verfahren nach Anspruch 1, wobei der Young-Modul des Polymermaterials des Endteilstücks (32) der Druckhülle (20) im Schritt des relativen Verlagerns kleiner als 1000 MPa ist und insbesondere im Bereich von 50 MPa bis 500 MPa liegt.

3. Verfahren nach Anspruch 1 oder 2, wobei die Temperatur des Endteilstücks (32) der Druckhülle (20) im Schritt des relativen Verlagerns höher als die Umgebungstemperatur ist.

4. Verfahren nach Anspruch 3, wobei die Temperatur des Endteilstücks (32) der Druckhülle (20) im Schritt des relativen Verlagerns höher als 50 °C ist und insbesondere im Bereich von 100 °C bis 200 °C liegt.

5. Verfahren nach einem der vorhergehenden Ansprüche, wobei die Druckhülle (20) aus einem Polymermaterial hergestellt ist, das gewählt ist aus PVDF, PEK, PEEK, PEEKK, PEKK, PEKEKK, PAI, PEI, PSU, PPSU, PES, PAS, PPE, PPS, LCP, PPA und/oder aus ihren Gemischen.

6. Verfahren nach einem der vorhergehenden Ansprüche, wobei das Endteilstück (32) der Druckhülle (20) während des Erwärmungsschrittes von außen erwärmt wird.

7. Verfahren nach Anspruch 6, wobei eine äußere Oberfläche des Endteilstücks (32) der Druckhülle (20) durch direkten Kontakt eines Heizelements (92) mit der Druckhülle (20) und/oder mit dem Klemmring (74) erwärmt wird.

8. Verfahren nach Anspruch 6, wobei der Schritt des Anordnens der Endschulter (50) vor dem Heizschritt ausgeführt wird, wobei der Heizschritt das Erwärmen der Endschulter (50) durch direkten Kontakt der Endschulter (50) mit einem Heizelement (92) und das Erwärmen einer äußeren Oberfläche des Endteilstücks (32) der Druckhülle (20) durch die Endschulter (50) hindurch umfasst.

9. Verfahren nach einem der Ansprüche 7 oder 8, wobei das Heizelement (92) ein Heizband und/oder eine Heizabdeckung ist.

10. Verfahren nach einem der vorhergehenden Ansprüche, wobei das Endteilstück (32) der Druckhülle (20) während des Heizschrittes von innen erwärmt wird.

11. Verfahren nach Anspruch 10, wobei das Endteilstück (32) der Druckhülle (20) um eine innere Karkasse (26) angeordnet ist, die einen inneren Durchlass (16) für die Zirkulation von Fluid definiert, wobei der Heizschritt das Erwärmen der inneren Karkasse (26) von innen umfasst.

12. Verfahren nach Anspruch 11, wobei die innere Karkasse (26) durch einen Heizdorn (94) und/oder durch die Zirkulation von heißer Luft in dem Fluidzirkulationsdurchlass (16) erwärmt wird.

13. Verfahren nach einem der Ansprüche 11 oder 12, wobei zwischen eine Opferhülle (22), die um die innere Karkasse (26) angeordnet ist, und das Zwischenteilstück (32) der Druckhülle (20) eine Kanüle (80) eingefügt ist, wobei die Kanüle (80) im Schritt des Erwärmens der inneren Karkasse (26) erwärmt wird und wobei eine innere Oberfläche des Endteilstücks (32) der Druckhülle (20) durch die Kanüle (80) erwärmt wird.

14. Verfahren nach einem der vorhergehenden Ansprüche, das einen Schritt des Messens der Temperatur des Endteilstücks (32) der Druckhülle (20) während des Heizschrittes umfasst.

15. Verfahren nach einem der vorhergehenden Ansprüche, wobei die relative Verlagerung des Klemmrings (74) in Bezug auf die Endschulter (50) eine radiale Verlagerung in Bezug auf eine Achse (X-X') der biegsamen Leitung (10) ist.

## Claims

1. A method for forming a seal in an end piece (14) of a flexible pipe (10) comprising a pressure sheath (20) made from a polymer material, the method comprising the following steps :
- providing, around an end section (32) of the pressure sheath (20), a crimping ring (74) that is intended to be introduced into the pressure sheath (20);
- placing, around the end section (32) and the crimping ring (74), an end vault (50) of the end piece (14), the end vault (50) having an engagement surface (64) for engaging with the crimping ring (74) able to push the crimping ring (74) radially into the pressure sheath (20);
- relatively moving the crimping ring (74) in relation to the engagement surface (64) in order to crimp the crimping ring (74) in the pressure sheath (20);
**characterized in that** the method includes, prior to the step of relative moving, a step of heating the end section (32) of the pressure sheath (20), able to reduce the Young's modulus of the polymer material of the end section (32) of the pressure sheath (20) and to maintain a reduced Young's modulus during the relative moving step.

2. The method according to claim 1, wherein the Young's modulus of the polymer material of the end section (32) of the pressure sheath (20) during the relative moving step, is less than 1000 MPa and is in particular comprised between 50 MPa and 500 MPa.

3. The method according to claim 1 or 2, wherein the temperature of the end section (32) of the pressure sheath (20) during the relative moving step, is higher than the ambient temperature.

4. The method according to claim 3, wherein the temperature of the end section (32) of the pressure sheath (20), during the relative moving, is higher than 50°C and is in particular comprised between 100°C and 200°C.

5. The method according to any one of the preceding claims, wherein the pressure sheath (20) is made from a polymer material selected from among PVDF, PEK, PEEK, PEEKK, PEKK, PEKEKK, PAI, PEI, PSU, PPSU, PES, PAS, PPE, PPS, LCPs, PPA and/or mixtures thereof.

6. The method according to any one of the preceding claims, wherein the end section (32) of the pressure sheath (20) is heated from the exterior during the heating step.

7. The method according to claim 6, wherein an exterior surface of the end section (32) of the pressure sheath (20) is heated by direct contact of a heating element (92) with the pressure sheath (20) and/or with the crimping ring (74).

8. The method according to claim 6, wherein the step of placing the end vault (50) is carried out prior to the heating step, the heating step comprising of the heating of the end vault (50) by direct contact of the end vault (50) with a heating element (92), and the heating of an exterior surface of the end section (32) of the pressure sheath (20) through the end vault (50).

9. The method according to claim 7 or 8, wherein the heating element (92) is a heating strip and/or a heating cover-sheet.

10. The method according to any one of the preceding claims, wherein the end section (32) of the pressure sheath (20) is heated from the interior during the heating step.

11. The method according to claim 10, wherein the end section (32) of the pressure sheath (20) is disposed around an internal carcass (26) that defines an internal passage (16) for circulating the fluid, the heating step comprising of the heating from the interior of the internal carcass.

12. The method according to claim 11, wherein the internal carcass (26) is heated by a heating mandrel (94) and/or by circulation of hot air in the fluid circulation passage (16).

13. The method according to claim 11 or 12, wherein a cannula (80) is interposed between a sacrificial sheath (22) arranged around the internal carcass (26) and the intermediate section (32) of the pressure sheath (20), the cannula (80) being heated at the heating step by the internal carcass (26), an internal surface of the end section (32) of the pressure sheath (20) being heated by the cannula.

14. The method according to any one of the preceding claims, including a step of measuring the temperature of the end section (32) of the pressure sheath (20) during the heating step.

15. The method according to any one of the preceding claims, wherein the relative movement of the crimping ring (74) in relation to the end vault (50) is a radial movement relative to an axis of the flexible pipe (10).
